(19) **Europäisches Patentamt**

**European Patent Office**

**Office européen des brevets**

(11) **EP 1 089 308 B1**

(12) **EUROPÄISCHE PATENTSCHRIFT**

(45) Veröffentlichungstag und Bekanntmachung des Hinweises auf die Patenterteilung:
**23.02.2005 Patentblatt 2005/08**

(51) Int Cl.⁷: **H01H 47/00**, H01H 51/04, H01H 71/26

(21) Anmeldenummer: **00119577.5**

(22) Anmeldetag: **07.09.2000**

(54) **Anordnung zum Ein- und Ausschalten elektrischer Lastkreise**

Device for switching-on and switching-off of a power circuit

Dispositif pour la fermeture et la coupure d'un circuit de puissance

(84) Benannte Vertragsstaaten:
**DE FR IT**

(30) Priorität: **30.09.1999 DE 19947105**

(43) Veröffentlichungstag der Anmeldung:
**04.04.2001 Patentblatt 2001/14**

(73) Patentinhaber: **SIEMENS AKTIENGESELLSCHAFT 80333 München (DE)**

(72) Erfinder: **Pohl, Fritz, Dipl.-Phys. 91334 Hemhofen (DE)**

(56) Entgegenhaltungen:
**DE-A- 4 322 935        DE-A- 19 619 835
DE-A- 19 834 474**

**Beschreibung**

Verfahren und zugehörige Anordnungen zum Schalten elektrischer Lastkreise

Die Erfindung bezieht sich auf Verfahren zum Einschalten elektrischer Lastkreise, enthaltend ein Schütz mit einem Magnetantrieb, der aus einem Magnetjoch mit einer Magnetspule und einem Magnetanker, an dem Brückenkontakte als bewegliche Kontakte des Schützes über eine Kontakthalterung angekoppelt sind, besteht, und der im Einschaltzustand eine magnetische Haltekraft zwischen Anker und Joch erzeugt, die größer ist als die Ankeröffnungskraft. Daneben bezieht sich die Erfindung auf zugehörige Anordnungen zur Ausführung der Verfahren.

Schütze eignen sich durch ihren elektrisch aktivierten Magnetantrieb zum ferngesteuerten, häufigen Ein- und Ausschalten elektrischer Lastkreise. Der Magnetantrieb besteht üblicherweise aus einem Magnetjoch mit einer Magnetspule und einem Magnetanker, an den die beweglichen Kontakte, beispielsweise Brückenkontakte, über ihre Kontakthalterung angekoppelt sind.

Schützmagnetantriebe werden mit Wechselstrom oder Gleichstrom betrieben. Die Schaltzeiten, d. h. die Zeitdauer des Ein- oder Ausschaltvorgangs, derartiger Magnetantriebe liegen bei etwa 20ms. Damit ist aber eine rechtzeitige Reaktion zur Abschaltung von Kurzschlüssen nicht möglich. Ein Kurzschlußschutz wird daher üblicherweise durch schnell reagierende Schaltgeräte, wie Sicherungen oder Leistungsschalter, welche zum Schütz elektrisch in Reihe geschaltet sind, realisiert, um durch die Begrenzung des Durchlaßstromes Schäden am Schütz zu vermeiden.

Die vorstehend angegebene Reihenschaltung eines Schaltgerätes mit einem Schütz wird je nach Funktionssicherheit in sogenannte Koordinationstypen eingeteilt. Beispielsweise kann nach einem Kurzschluß bei Koordination Typ 1 ein Austausch des Schützes notwendig sein, während bei Koordination Typ 2 die Funktion durch Aufbrechen leichtverschweißter Kontakte wiederherstellbar sein muß und bei Koordination Typ 3 keine Funktionsbeeinträchtigung auftreten darf. Aufgrund der technischen Anforderungen muß zum Erreichen der Koordination Typ 2 oder Typ 3 bei einem vorgegebenen Betriebsstrom eine Überdimensionierung der Schütz-Baugröße bei der Geräteauswahl erfolgen.

Bei Schützen mit kleineren Nennbetriebsströmen, z.B. $I_e$ = 32 A, sind verschiedene Kombinationsschaltgeräte auf dem Markt, bei denen die Schaltkontakte des Schützes über Magnetauslöser im Kurzschlußfall unverzögert geöffnet werden. Dieses Schaltprinzip ist für Schütze mit größerem Nennbetriebsstrom, z.B. $I_e$ > ≈100A, nicht praktikabel.

Eine andere technische Möglichkeit zur Realisierung eines Verschweißschutzes wird in der nicht vorveröffentlichten DE 198 34 474 A1 vorgeschlagen. Hierbei wird durch einen Leistungsschalter mit besonderen konstruktiven Merkmalen eine elektrische Überbrükkung der Schaltpole des Schützes vorgenommen, wodurch der Kurzschlußstrom an den Hauptkontakten des Schützes, insbesondere an den Brückenkontakten, vorbeigeleitet wird.

Aus der DE 40 22 612 A1 ist ein Überstromschutz mit einem monostabilen elektromagnetischen System, wie insbesondere Relais, aber auch Schütz od. dgl., bekannt, bei dem zwei Spulenwicklungen vorhanden sind, von denen die erste als Erregerwicklung im Erregerstromkreis des Systems liegt und die zweite Stromwicklung in Serienschaltung im Stromkreis des zu überwachenden Verbrauchers angeordnet ist. Dabei sind die beiden Spulenwicklungen auf demselben Spulenkörper angeordnet, jedoch mit gegensinniger Wicklungsrichtung und in einer derartigen Dimensionierung, dass bei Erreichen eines vorbestimmten Überstroms im Verbraucherstromkreis die Stromwicklung ein Magnetfeld induziert, dessen Betrag dem von der Erregerwicklung induzierten Magnetfeld entspricht. Aus der DE 42 44 121 A1 ist eine Schaltungsanordnung mit einem elektromagnetischen Relais bekannt, bei dem die den Laststrom leitenden Relaiskomponenten zumindest teilweise entlang des Umfangs der Relaisspule angeordnet sind, wobei die Richtung des Laststromes in den entlang des Umfanges der Relaisspule angeordneten Leiterelementen entgegengesetzt zur Stromrichtung des Spulenstroms durch die Relaisspule ist. Beide Lösungen sind speziell nur für Relais, aber nicht für Schützantriebe geeignet.

Weiterhin ist aus der DE 43 22 935 A1 ein Schaltgerät mit Magnetantrieb, beispielsweise ein Schütz, bekannt, das einen Magnetauslöser mit Schlaganker beinhaltet, der im Kurzschlußfall den Bewegkontakt öffnet und an dem diese Bewegkontakte direkt oder an einem mit dem Schlaganker gekoppelten Teil im offenen Zustand der Kontakte lösbar einrastet. Schließlich wird in der DE 196 19 835 A1 ein bistabiler Magnetantrieb mit Dauermagnet beschrieben, bei dem der Magnetantrieb durch eine stromstarke Magnetspule eingeschaltet und bis zum Ausschaltvorgang durch einen Permanentmagneten in Einschaltposition festgehalten wird. Zum Ausschalten wird durch Betätigen einer zweiten Magnetspule ein Nebenschlußkörper freigegeben und gegen den Anker des Magnetantriebes bewegt. Dadurch wird das Magnetfeld des ersten Permanentmagneten wenigstens teilweise vom Arbeitsluftspalt auf den Nebenschlußkörper verlagert, wodurch die Magnetkraft am Arbeitsluftspalt unter die notwendige Haltekraft sinkt und der Magnetanker in Öffnungsposition bewegt wird.

Die elektrische Überbrückung bietet einen hohen Schutz gegen Kontaktverschweißungen. Sie erfordert jedoch eine spezifische Konstruktion des hierfür vorgesehenen Leistungsschalters, der in jedem Fall strombegrenzend sein muß.

Aufgabe der Erfindung ist es, mit einfachen technischen Mitteln elektromechanische Schütze üblicher Bauart gegen Kontaktverschweißungen zu schützen. Dazu soll ein geeignetes Verfahren angegeben werden und zugehörige Anordnungen geschaffen werden.

Die Aufgabe ist bei einem Verfahren der eingangs genannten Art durch die Maßnahmen alternativ des Patentanspruches 1 gelöst. Zugehörige Anordnungen sind in den Ansprüchen 7, 8 oder 12 angegeben. Weiterbildungen des Verfahrens und der zugehörigen Anordnungen sind Gegenstand der Unteransprüche.

Bei der Erfindung erfolgt eine Schnellausschaltung des Schützantriebes, wobei die Schnellausschaltung entweder durch eine Erhöhung des magnetischen Widerstandes im Eisenkreis des Magnetantriebes herbeigeführt wird oder durch eine elektrische Gegenspannung im Spulenstromkreis und/oder durch Schalten eines Elementes mit hohem Spannungsbedarf in den Spulenkreis erfolgt, womit die Brückenkontakte als Schützhauptkontakte im Kurzschlußfall bleibend geöffnet werden.

Vorzugsweise sind Mittel zur Kurzschlußvorprüfung des Lastkreises mit Einschaltverhinderung vorgesehen. Es können auch Mittel zur Kurzschlußerfassung des Lastkreises vorgesehen sein, durch die eine Schnellausschaltung des Schütz-Magnetantriebes eingeleitet wird. Somit wird bei einem Schütz das Verschweißen der Brückenkontakte als Schützhauptkontakte wirksam verhindert. Dies kann beim Stand der Technik nicht erreicht werden.

Durch die Erfindung ist ein Schütz beim sogenannten Prüfstrom "r" gegen Kontaktverschweißungen geschützt. Der Prüfstrom "r" stellt einen für die Praxis maßgeblichen Kurzschlußstrom dar und hat bei einem 110 A-Schütz (AC3-Nennbetriebsstrom) den prospektiven Kurzschlußstromwert von 5 kA. Kurzschlußströme bewirken im allgemeinen als Folge großer Magnetkräfte ein dynamisches Abheben beweglicher Kontakte, wobei an den Kontakten vom Lichtbogen Kontaktmaterial aufgeschmolzen wird.

Bei der Erfindung wird durch die Schnellausschaltung des Schützantriebes erreicht, daß die Schützhauptkontakte bleibend geöffnet sind, bevor das geschmolzene Kontaktmaterial wieder erstarrt und hohe Schweißkräfte erzeugt. Dabei ist zu erwarten, daß es einen unteren Strombereich gibt mit weitgehender Schweißfreiheit, einen mittleren Strombereich, bei dem bei kurzer Bogendauer, z.B. 2 bis 5 ms, genügend Schmelze vorhanden ist und wiederschließende Kontakte verschweißen, und einen oberen Strombereich, bei dem die Kontakte über den zögerung des Ankerbewegungsbeginns. Für eine Schütz-Schnellausschaltung sind daher eine Wechselstromerregung und eine Anwendung von Wirbelstromringen ungeeignet.

- Gleichstrombetriebene Schütz-Magnetantriebe können Eisenkreise, z.B. Magnetanker, besitzen, die partiell nicht oder nur mäßig lamelliert sind. Zudem werden meist Beschaltungen (RC-Glied, Freilaufdiode, od. dgl.) der Magnetspule vorgenommen, um Überspannungen wirksam zu begrenzen. Beide genannten Merkmale, d.h. ungenügende Lamellierung, Spulenbeschaltung, führen beim Ausschaltvorgang zu einer erheblichen zeitlichen Verzögerung und sind daher für eine Schütz - Schnellausschaltung ungeeignet.

- Als geeignet erweist sich ein Schütz-Magnetantrieb mit lamelliertem Eisenkreis, d.h. Anker und Joch ohne Wirbelstromringe, und einer gleichstrombetriebenen Magnetspule.

Im Rahmen der Erfindung wird die angestrebte Vermeidung von Kontaktverschweißungen bereits durch die Schnellausschaltung des Schützantriebes realisiert, wobei die Kurzschlussvorprüfung des Lastkreises mit Einschaltverhinderung besonders vorteilhaft ist.

Weitere Einzelheiten und Vorteile der Erfindung ergeben sich aus der nachfolgenden Figurenbeschreibung von Ausführungsbeispielen anhand der Zeichnung in Verbindung mit weiteren Unteransprüchen.

Es zeigen

| | |
|---|---|
| Figur 1 | eine schematische Darstellung eines Schützes, |
| Figur 2 | in schematischer Darstellung die Stromführung zur Erzeugung eines Sperrmagnetfeldes im Magnetjoch des Schützes gemäß Figur 1, |
| Figur 3 | ein Schaltbild der Schnellausschaltung mittels Sperrmagnetfeld an einem Schütz gemäß Figur 1, |
| Figur 4 | Zeitdiagramme von Messsignalen einer Anordnung gemäß Figur 2/Figur 3, |
| Figur 5 | ein Blockschaltbild zur Schnellausschaltung mittels Gegenspannungspuls an einem Schütz gemäß Figur 1, |
| Figur 6 | Zeitdiagramme von Messungen bei einer Anordnung gemäß Figur 5, |
| Figur 7 | ein Blockschaltbild zur Schnellausschaltung durch Unterbrechung des Steuerstromkreises an einem Schütz gemäß Figur 1 und die |
| Figuren 8 und 9 | Zeitdiagramme von Messsignalen einer Anordnung gemäß Figur 7. |

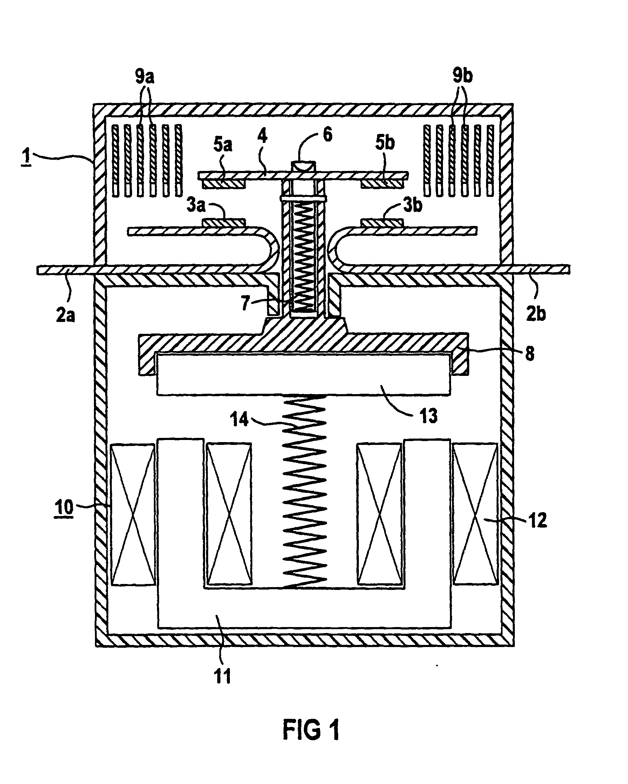

In Figur 1 sind die Funktionskomponenten eines bekannten Schützes schematisch dargestellt: Das Schütz besteht im Wesentlichen aus einer Schaltkammer 1 mit den darin vorhandenen Schaltkomponenten und einem Magnetantrieb 10, mit dem elektromagnetisch aktiviert eine mechanische Bewegung der Schaltkontakte erfolgt.

In Figur 1 sind in der Schaltkammer Festkontakte 3a und 3b auf Festkontaktträgern 2a und 2b angeordnet und sind diesen zugeordnete Bewegkontakte 5a und 5b auf einer beweglichen Schaltbrücke 4 vorhanden. Der Kontaktanordnung mit den einander gegenüberstehenden Kontakten 3a, 5a und 3b, 5b sind in bekannter Weise Löschblechanordnungen 9a und 9b zugeordnet. Die bewegliche Schaltbrücke 4 ist über ein Verbindungselement 6 mit Kontaktkraftfeder 7 an einem Brückenträger 8 befestigt, der mit dem Anker 13 vom Magnetantrieb 10 in die Einschaltoder Ausschaltposition bewegt wird.

Der Magnetantrieb 10 besteht im Einzelnen aus einem Magnetjoch 11 mit Magnetspule 12 und einem dem Joch zugeordneten Magnetanker 13, der mit dem Brückenträger 8 verbunden ist. Auf das Magnetjoch 11 wirkt eine Öffnungsfeder 14, die im Ausschaltzustand des Magnetantriebs 10 die Offenstellung der Schaltbrücken gewährleistet.

Nachfolgend werden drei Beispiele beschrieben, um eine Schnellausschaltung für den Schütz-Magnetantrieb 10 gemäß Figur 1 nach Erkennung des Kurzschlusses zu realisieren. Im Einzelnen bedeutet dies, jeweils Mittel bereitzustellen, um schnellstmöglich die Ankeröffnungsbewegung einzuleiten und die Hauptkontakte zu öffnen.

1. Schnellausschaltung mittels eines Sperrmagnetfeldes: Die physikalische Wirkung des Sperrmagnetfeldes kann so verstanden werden, dass in einem räumlich begrenzten Bereich des Eisenkreises durch eine genügend hohe magnetische Induktion eine annähernde magnetische Sättigung hervorgerufen wird. Demzufolge erfolgt eine starken Erniedrigung der relativen Permeabilität ($\mu_r \rightarrow 1$), wodurch dieser räumliche Bereich für das betriebsmäßige Magnetfeld ähnlich wirkt, wie ein zusätzlicher Luftspalt.

Die Stromführung zur Erregung des Sperrmagnetfeldes erfolgt daher senkrecht zur Lamellierungsebene, um den minimalen magnetischen Widerstand auszunutzen, und bildet Strompfade, die keine magnetische Spannung ($U_{mag} = \int (\underline{H^*ds}) = i$) in Richtung des betriebsmäßigen Magnetfeldes liefern.

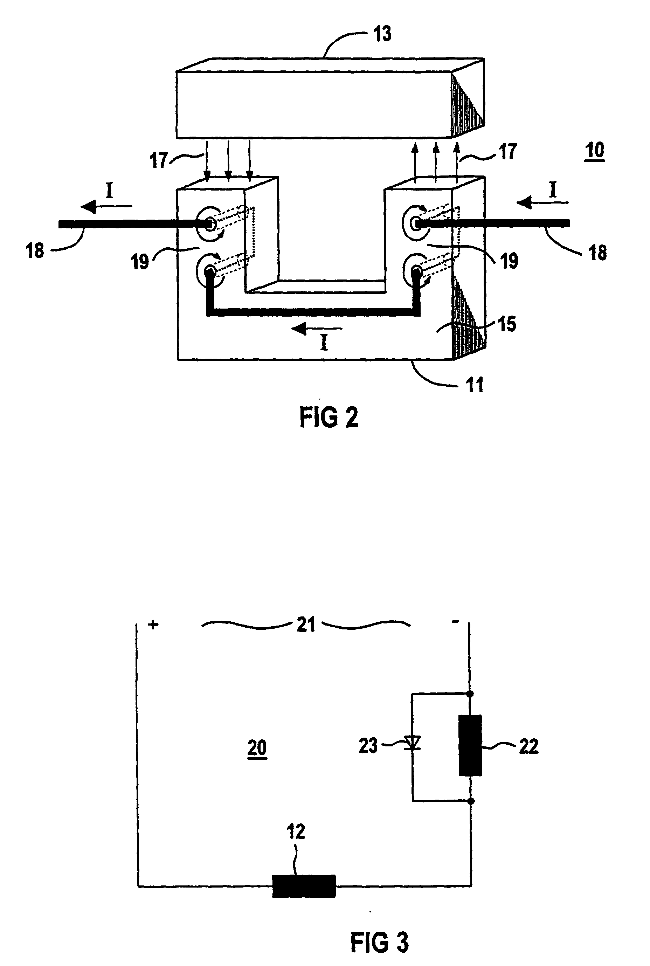

Die Figur 2 verdeutlicht das Prinzip eines Magnetkreises mit der Führung des Strompfades zur Erzeugung eines Sperrmagnetfeldes: Die Lamellierungsebene im Magnetkreis 11, 13 ist mit 15 bezeichnet, wobei der Stromfluss I durch die Strombahn 18 verdeutlicht wird. Die entgegengesetzten Pfeile im Bereich 19 zeigen den schematischen Verlauf des Sperrmagnetfeldes. Durch das Sperrmagnetfeld wird der magnetische Widerstand im Anker-Joch-Magnetkreis 11, 13 bei sich berührenden Polflächen so stark erhöht, dass der magnetische Fluss 17 auf einen Wert abnimmt, bei dem die Magnetkraft unter den Wert der Haltekraft sinkt. Da hierbei in der Magnetspule 12 gemäß Figur 1 eine hohe Spannung induziert wird, die der Flussabnahme mit einer Erhöhung des Spulenstromes entgegenzuwirken sucht, muss der Spulenstrom mit geeigneten Maßnahmen während der Schnellabschaltung begrenzt werden.

Eine einfache, passive Maßnahme hierzu ist entsprechend Figur 3 eine elektrische Reihenschaltung der Schütz-Magnetspule 12 aus Figur 1 mit einer genügend großen Vorinduktivität 22. Der Vorinduktivität ist eine Freilaufdiode 23 parallelgeschaltet.

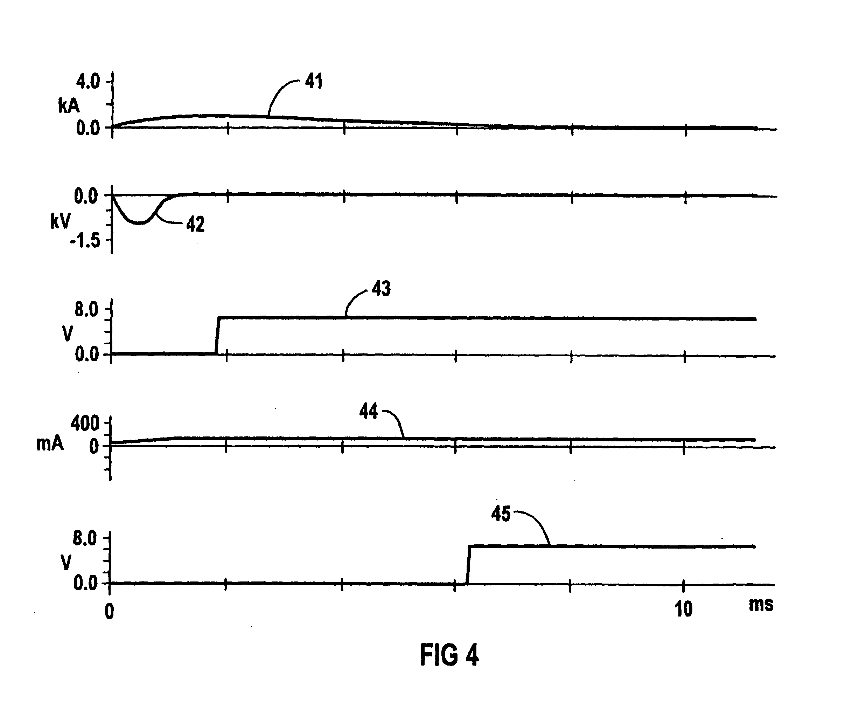

Die Figur 4 zeigt das Messoszillogramm einer Schnellausschaltung mittels Sperrmagnetfeld an einem Schütz mit Bemessungsbetriebsstrom $I_e$ = 75A. Zur Begrenzung des Spulenstromes während der Schnellausschaltung ist der Magnetspule eine Induktivität von 17 H elektrisch in Reihe geschaltet. Der Spulengleichstrom beträgt vor der Schnellausschaltung etwa 80 mA und liefert damit etwa das 4,5fache der Mindesterregung des Magnetantriebs. Während der Schnellausschaltung steigt der Spulenstrom auf etwa 125 mA an. Die Mindesterregung ist dadurch bestimmt, dass die bei geschlossenem Eisenkreis erzeugte Magnetkraft gleich der gesamten Federöffnungskraft ist.

Von den oszillographierten Messkurven der Figur 4 zeigen:

Kurve 41     den Strompuls ($i^\wedge$= 1000 A) zur Erregung des Sperrmagnetfeldes,
Kurve 42     die Spulenspannung ($Usp^\wedge$= -920 V),
Kurve 43     den Beginn des Ankerabhebens vom Magnetjoch (t-Anker = 1,8 ms),
Kurve 44     den Spulenstrom und
Kurve 45     den Beginn des Kontaktöffnens (t-Kontakt= 6,2 ms) Strombeginn (Kurve 1) = t = 0.

Die Methode des Sperrmagnetfeldes kann vorteilhaft bei einem Schütz in einem Gleichstromnetz angewandt werden, um den Schützantrieb durch den Kurzschlussstrom selbst schnell auszuschalten, ohne weitere Steuerungsmittel einsetzen zu müssen.

2. Schnellausschaltung mittels Gegenspannungspuls: Ein Gegenspannungspuls wird von einem aufgeladenen Kondensator über ein geeignetes Schaltelement direkt an die Magnetspule angelegt. Um den Steuerstromkreis vom Gegenspannungspuls an der Magnetspule 12 weitgehend zu entkoppeln, kann wie unter Punkt 1 eine Reiheninduktivität eingesetzt werden.

Die Spannungs-Zeit-Fläche des Pulses wird so gewählt, dass der Spulenstrom von einem vorgegebenen Gleichstromwert auf einen geringen, entgegengesetzten Wert abnimmt. Eine "Überentregung" durch eine zu große Spannungszeitfläche des Pulses kann damit vermieden werden.

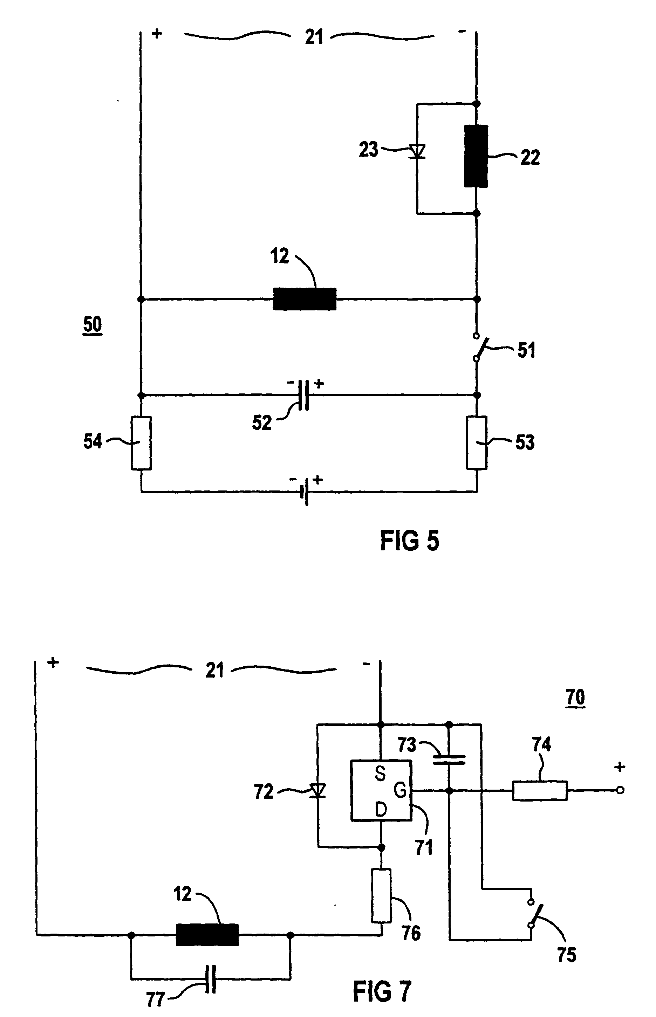

Die Figur 5 zeigt das Prinzipbild des Steuerstromkreises mit Gegenspannungseinrichtung. Zur Entkopplung des Steuerstromkreises während der Schnellausschaltung ist entsprechend Figur 3 zur Magnetspule 12 die Vorinduktivität 22 von 2,5 H elektrisch in Reihe geschaltet. Der Spulengleichstrom beträgt vor der Schnellausschaltung beim 75 A-Schütz etwa 80 mA, sowie beim 110 A-Schütz etwa 120 mA und liefert damit etwa die 4,5fache der Mindesterregung der Magnetantriebe. Die vorgegebene Gegenspannung beträgt beim 75 A-Schütz 700 V und beim 110 A-Schütz 800 V, die Kapazität des Pulskondensators 52 2 μF. Als Schaltelement zum Einschalten der Gegenspannung wird beispielsweise ein Reedschalter 51 verwendet. Dieser durch das Magnetfeld betätigte Schalter dient gleichzeitig als Kurzschlusssensor, indem sein Ansprechwert auf einen Stromwert von beispielsweise 1 kA eingestellt und der zu überwachenden Strombahn zugeordnet ist.

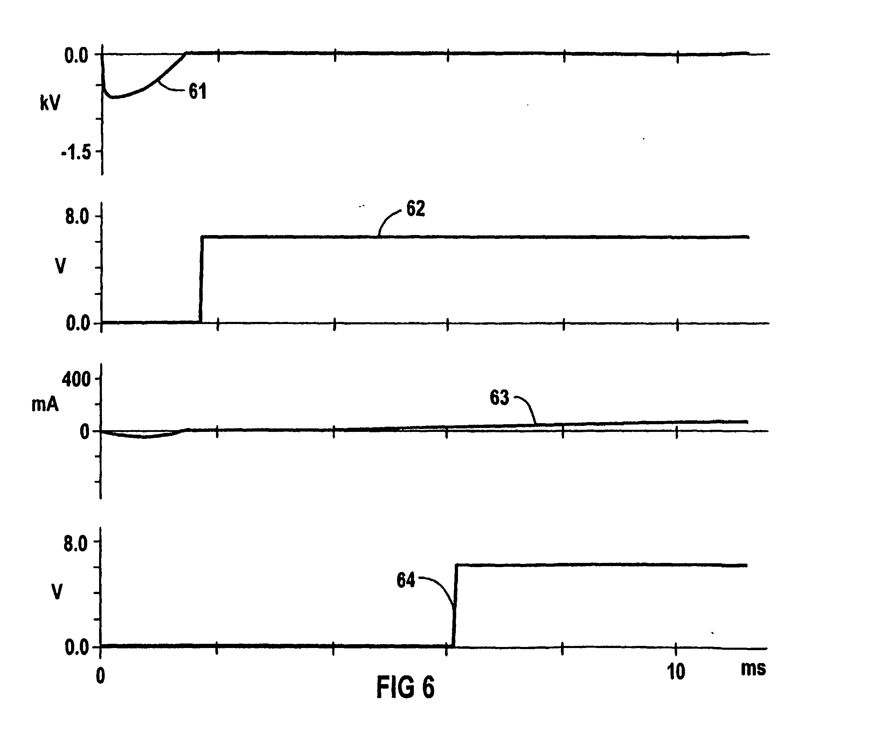

Die Figur 6 zeigt das Messoszillogramm einer Schnellausschaltung mittels Gegenspannungspuls an einem Schütz mit einem Bemessungsbetriebsstrom von 75 A.

Von den oszillographierten Messkurven in Figur 6 zeigen:

| Kurve 61 | die Spulenspannung mit Gegenspannungspuls, |
|---|---|
| Kurve 62 | den Beginn des Ankerabhebens vom Magnetjoch (t-Anker = 1,7 ms(75 A-Schütz)), |
| Kurve 63 | den Spulenstrom und |
| Kurve 64 | den Beginn des Kontaktöffnens (t-Kontakt = 6,2 ms (75 A-Schütz). |

Der Spannungspulsbeginn entsprechend Kurve 61 ist t = 0.

3. Schnellausschaltung durch Unterbrechung des Steuerstromkreises: Bei dieser Maßnahme übernimmt das unterbrechende Schaltelement die Trennung der Magnetspule vom Steuerstromkreis, weshalb keine Reiheninduktivität benötigt wird, und die Magnetspule erzeugt bei der Flussabnahme einen Spannungspuls, welcher durch eine Spannungsbegrenzung mittels einer Supressordiode auf beispielsweise 800 V begrenzt ist. Zusätzlich kann ein zur Magnetspule parallelgeschalteter Kondensator zur Pulsformung verwendet werden.

Als Schaltelement kann beispielsweise ein Feldeffekttransistor mit ausreichend hoher Sperrspannung (z.B. 1000 V) und niedrigem Einschaltwiderstand (z.B. 3 Ω) verwendet werden. Im Ausführungsbeispiel wird ein N-Kanal IG-FET vom Anreicherungstyp eingesetzt, welcher im Normalbetrieb des Schützes im Einschaltzustand ist und nur im Kurzschlussfall z.B. durch einen Reedschalter, welcher Gate und Source kurzschließt, ausgeschaltet wird.

Kurzschlussschaltversuche am 110 A-Schütz beim Strom "r" (=$I_{prospektiv}$=5kA) mit der Schaltprüfung "O" (= open, d.h. Schütz im Einschaltzustand) und "C-O" (closed-open, d.h. Schütz schaltet Kurzschluss ein) ergeben den Koordinationstyp 3 oder 2. Die Schaltversuche wurden an einer Kondensatorbatterie mit einer eingestellten Dauer der Stromhalbwelle von ≈ 8 ms durchgeführt.

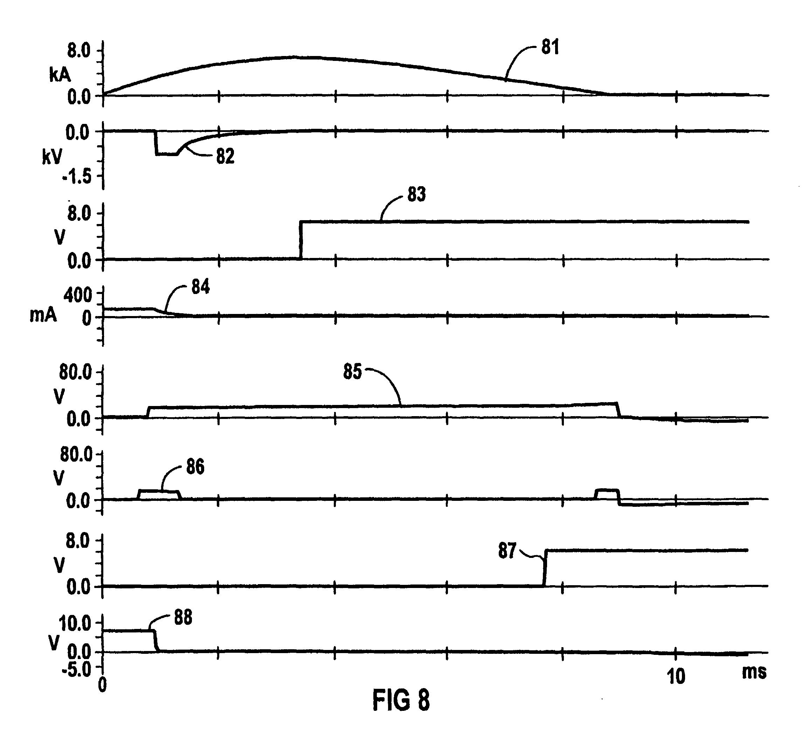

Die Figur 7 zeigt das Prinzipbild des Steuerstromkreises mit unterbrechendem Schaltelement. Hierzu wird ein Feldeffekttransistor 71 mit der Ansteuerung durch den Reedschalter 75 sowie Widerständen 74,76 und einer Kapazität 73 verwendet. Der durch das Magnetfeld des Hauptstrompfades betätigte Reedschalter 55 dient gleichzeitig als Kurzschlusssensor mit einem eingestellten Ansprechwert von beispielsweise 1 kA. Die Supressordiode 72 dient zur Spannungsbegrenzung und der Kondensator 77 zur Pulsformung der Spulenspannung.

Die Figur 8 zeigt das Messoszillogramm einer Schnellausschaltung durch Unterbrechung des Steuerstromkreises bei der Kurzschluss-Schaltprüfung "O".

Von den oszillographierten Messkurven in Figur 8 zeigen:

| Kurve 81 | den Kurzschlussstrom (I^= 6,5 kA), |
|---|---|
| Kurve 82 | die Spulenspannung (Usp^= -820 V), |
| Kurve 83 | den Beginn des Ankerabhebens vom Magnetjoch (t-Anker = 3,5 ms), |
| Kurve 84 | den Spulenstrom (vor Schnellausschaltung 120 mA), |
| Kurve 85 | die Bogenspannung am oberen Brückenkontakt, |
| Kurve 86 | die Bogenspannung am unteren Brückenkontakt, |
| Kurve 87 | den Beginn des Kontaktöffnens (t-Kontakt = 7,7 ms) und |
| Kurve 88 | den Beginn der Spulenstrom-Unterbrechung (t-Feldeffekttransistor = 0,95 ms). |

Der Strombeginn entsprechend Kurve 81 liegt bei t = 0. Als Ergebnis wird erreicht, dass die Brückenkontakte nach dem Kurzschluss geöffnet sind.

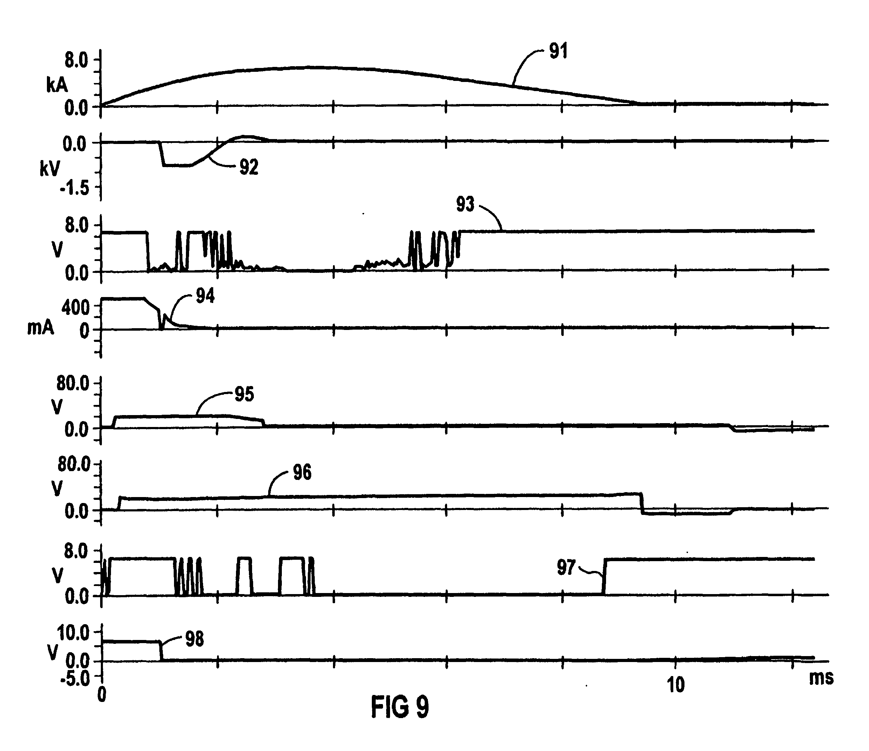

Die Figur 9 zeigt das Messoszillogramm einer Schnellausschaltung durch Unterbrechung des Steuerstromkreises bei der Kurzschluss-Schaltprüfung "C-O".

Von den oszillographierten Messkurven in Figur 9 zeigen:

| Kurve 91 | den Kurzschlussstrom (I^= 6,35 kA), |
|---|---|
| Kurve 92 | die Spulenspannung (Usp^= -840 V), wobei die Spule mit 10 nF beschaltet ist, |
| Kurve 93 | den Beginn des Ankerabhebens vom Magnetjoch (t-Anker = 5,4 ms), |
| Kurve 94 | den Spulenstrom (vor der Schnellaus- |

schaltung abklingend auf ≈ 300 mA),

Kurve 95    die Bogenspannung am oberen Brückenkontakt,

Kurve 96    die Bogenspannung am unteren Brückenkontakt,

Kurve 97    den Beginn des Kontaktöffnens (t-Kontakt
= 8,8 ms),

Kurve 98    den Beginn der Spulenstrom-Unterbrechung (t-Feldeffekttransistor = 1,02 ms).

Der Strombeginn entsprechend Kurve 91 liegt bei t = 0. Als Ergebnis wird erreicht, dass die Brückenkontakte nach dem Kurzschluss geöffnet sind.

Das Ergebnis beider Abschaltungen entsprechend Figur 8 und 9 entspricht der Koordination Typ 3. Wie oben erwähnt, erhält man bei manchen Kurzschlussschaltungen aufbrechbare Kontaktverschweißungen, entsprechend Koordination Typ 2. Die Eigenschaften der Schnellausschaltung lassen sich durch Reduzieren der magnetischen Remanenz weiter verbessern, d.h. durch eine feinere Lamellierung, durch einen vergrößerten Zwangsluftspalt, durch ein anderes Material, und/oder durch Erhöhung der Federkräfte, wodurch die Ankerbeschleunigung zunimmt und damit sich die Kontaktöffnungszeit verkürzt und die Aufbrechenergie vergrößert.

In einer weiteren Ausführungsform der Erfindung erfolgt eine elektronische trägheitslose Kurzschlusserfassung mit der Vermeidung der Kurzschlussdraufschaltung durch eine Impedanzprüfung des Lastkreises vor dem Einschalten und der Einschaltverhinderung im Störfall. Die elektronische Kurzschlusserfassung kann z.B. mit Magnetosensorik an der zu überwachenden Strombahn erfolgen und mit geeigneten Auswertealgorithmen kann eine Kurzschlussfrüherkennung realisiert sein.

Die Kurzschlussimpedanz eines Lastkreises kann auf einfache Weise mit einem L-C-R-Schwingkreis grob bestimmt werden. Mit der bekannten Schwingkreiskapazität $C_0$, z.B. $C_0$ = 100 nF, Ladespannung 10 V, werden aus den Daten der elektrischen Schwingung die unbekannten Werte der Induktivität L und des ohmschen Widerstandes R des Lastkreises bestimmt.

Durch ein geeignetes Schaltelement, z.B. ein Relais, wird der aufgeladene Kondensator an den Lastkreis (einpolig L-N, dreipolig: aufeinanderfolgend L1-L2, L2-L3, L3-L1) angeschlossen. Man erhält in bekannter Weise eine gedämpfte Schwingung mit den Messgrößen

- Schwingungsdauer

$$\omega = (1/LC - R^2/4L^2)^{1/2}$$

und
- Amplitudendämpfungsfaktor = exp -Rt/2L.

Nimmt man hierzu die Abklingzeit, z.B. auf 10 % der Anfangsamplitude, als Messwert, so folgt

z.B.

$$R/2L = - \ln 0.1/ t_{meß}.$$

Mit der bekannten Schwingkreiskapazität $C_0$ erhält man aus den Messgrößen $\omega$ und $t_{meß}$ die Lastkreisgrößen

$$L = \{ C_0 \, [\omega^2 + (\ln 0.1/ t_{meß})^2]\}^{1/2}$$

und

$$R/L = - 2\ln 0.1/t_{meß}.$$

Mit der Netzfrequenz $\omega_N$ erhält man hieraus die Lastkreisimpedanz

$$Z = (R^2 + (\omega_N^2 L^2)^{1/2}.$$

Der prospektive Kurzschlussstrom ist dann durch $I_K = U_{Netz} / Z$ gegeben.

Mit der Schwingkreis-Methode ist eine Beurteilung hinsichtlich eines Lastkreis-Kurschlusses innerhalb einer Mess- und Auswertezeit von etwa 100 µs möglich. Die Prüfdauer hängt im Wesentlichen von der Ein-/Ausschaltgeschwindigkeit der verwendeten Schaltelemente zum elektrischen Anschließen des Schwingkreiskondensators ab. Für die Prüfung eines 3-phasigen Netzes werden 10 ms Prüfdauer als hinreichend angesehen.

Die vorstehend im Einzelnen beschriebenen Methoden der Schnellausschaltung eröffnen für Schütze heutiger Bauart die Möglichkeit eines verschweißfreien Betriebes, ohne die Notwendigkeit einer Überdimensionierung bei der Geräteauswahl und einem sehr hohen Kurzschlussschutz durch das schützende Schaltgerät. Besonders vorteilhaft ist dabei wegen seiner Einfachheit und dem geringen Aufwand das Beispiel 3 mit der "Unterbrechung des Steuerstromkreises".

Bei der "Schnellausschaltung" aus dem Einschaltzustand des Schützes (Schaltung "O") heraus erhält man eine sehr geringe Streuung der Kontaktöffnungszeitpunkte, so dass sich unmittelbar aus der Änderung der Öffnungszeiten ein Kontaktabbrand bestimmen lässt. Dies kann vorteilhaft für die Restlebensdauererkennung ausgenutzt werden, indem der Ankerbewegungsbeginn nicht durch eigene Messung bestimmt wird, sondern durch einen konstanten Zeitverzug bezüglich des Beginns der "Schnellausschaltung" definiert wird. Dies wird in der EP 0 694 937 A1 und in der WO 97 28 549 A1 im Einzelnen beschrieben.

Von letzterem abgesehen können bei den vorstehend beschriebenen Anordnungen die Daten der Schnellausschaltung - wie Kurzschluss, Kurzschlussstromhöhe und Restlebensdauer - an einer Betriebsanzeige des Schützes angezeigt werden. Die Daten können aber auch über einen Datenbus an eine zentrale Auswerte- und Überwachungseinrichtung übermittelt werden.

Durch die beschriebene Schütz-Schnellausschaltung erhöht sich insbesondere der sog. backup"-Schutz für einen in Reihe geschalteten Leistungsschalter, da die Schaltstrecke bzw. Schaltstrecken über den Stromnulldurchgang hinweg geöffnet bleiben und durch die Addition der Bogenspannungen von Schütz und Leistungsschalter das Schaltvermögen erhöht wird.

**Patentansprüche**

1. Verfahren zum Schalten elektrischer Lastkreise, enthaltend ein Schütz mit einem Magnetantrieb, der aus einem Magnetjoch mit einer Magnetspule und einem Magnetanker, an dem Brückenkontakte als bewegliche Schütz-Kontakte über eine Kontakthalterung angekoppelt sind, besteht und der im Einschaltzustand eine magnetische Haltekraft zwischen Anker und Joch erzeugt, die größer ist als die Ankeröffnungskraft,
mit folgenden Maßnahmen:

   - Zum Verschweißschutz der Brückenkontakte erfolgt beim Schütz-Magnetantrieb eine Schnellausschaltung im Millisekundenbereich, wozu

      - durch ein Sperrmagnetfeld eine Erhöhung des magnetischen Widerstandes im Eisenkreis des Magnetantriebes und eine daraus resultierende Absenkung des Spulenmagnetfeldes herbeigeführt wird oder eine elektrische Gegenspannung am Spulenstromkreis angelegt wird und/oder ein Element mit hohem elektrischen Spannungsbedarf in den Spulenstromkreis geschaltet wird,

   - wodurch die Brückenkontakte als Schützhauptkontakte bleibend geöffnet werden.

2. Verfahren nach Anspruch 1, **dadurch gekennzeichnet, dass** eine Kurzschlusserfassung des Lastkreises vorgesehen ist, durch welche die Schnellausschaltung des Schütz-Magnetantriebes (10) eingeleitet wird.

3. Verfahren nach Anspruch 1 oder Anspruch 2, **dadurch gekennzeichnet, dass** mit der Schnellausschaltung die Zeitdauer von Beginn der Ausschaltung bis zum Kontaktöffnungszeitpunkt ($t_o$) bestimmt wird und diese als Basis zur Bestimmung der Restlebensdauererkennung der Schaltkontakte (3a, 5a, 3b, 5b) ausgenutzt wird.

4. Verfahren nach einem der vorhergehenden Ansprüche, **dadurch gekennzeichnet, dass** Daten der Schnellausschaltung, wie Kurzschluss, Kurzschlussstromhöhe und Restlebensdauer, an einer Betriebsanzeige angezeigt werden.

5. Verfahren nach einem der vorhergehenden Ansprüche, **dadurch gekennzeichnet, dass** Daten der Schnellausschaltung über einen Datenbus an eine zentrale Auswerte- und Überwachungseinrichtung übermittelt werden.

6. Verfahren nach einem der vorhergehenden Ansprüche, **dadurch gekennzeichnet, dass** zur Schnellausschaltung ein Sperrmagnetfeld erzeugt wird, das in einem Teil (19) des Eisenkreises (15) senkrecht zum betriebsmäßigen Magnetfeld ($\vec{B}$) des magnetischen Antriebes (10) gerichtet ist und das den betriebsmäßigen magnetischen Fluss (17) des Magnetantriebes (10) schwächt.

7. Anordnung zum Schalten elektrischer Lastkreise, enthaltend ein Schütz mit einem Magnetantrieb, der aus einem Magnetjoch mit einer Magnetspule und einem Magnetanker, an dem Brückenkontakte als bewegliche Schütz-Kontakte über eine Kontakthalterung angekoppelt sind, besteht und mit Mitteln zum Verschweißschutz der Brückenkontakte, wobei die Maßnahmen des Anspruches 1 oder eines der Ansprüche 2 bis 6 durchgeführt werden, **dadurch gekennzeichnet, dass** zur eine Stromführung (18) zur Erregung des Sperrmagnetfeldes (19) senkrecht zur Lamellierungsebene (15) von Anker (13) und Joch (11) vorgesehen ist.

8. Anordnung zum Schalten elektrischer Lastkreise, enthaltend ein Schütz mit einem Magnetantrieb, der aus einem Magnetjoch mit einer Magnetspule und einem Magnetanker, an dem Brückenkontakte als bewegliche Schütz-Kontakte über eine Kontakthalterung angekoppelt sind, besteht und mit Mitteln zum Verschweißschutz der Brückenkontakte, wobei die Maßnahmen des Anspruches 1 oder eines der Ansprüche 2 bis 6 durchgeführt werden, **dadurch gekennzeichnet, dass** zur Schnellausschaltung ein aufgeladener Kondensator (52), der einen Gegenspannungspuls erzeugt, vorhanden ist.

9. Anordnung nach Anspruch 7 oder Anspruch 8, **dadurch gekennzeichnet, dass** eine Schütz-Magnetspule (12) mit einer Induktivität (22) mit hinreichend großem Induktivitätswert in Reihe geschaltet ist.

10. Anordnung nach Anspruch 8, **dadurch gekennzeichnet, dass** der Gegenspannungspuls über ein Schaltelement (51) an die Magnetspule (12) angelegt wird.

11. Anordnung nach Anspruch 10, **dadurch gekennzeichnet, dass** das Schaltelement (51) ein Reed-Schalter ist, der gleichermaßen als Kurzschlusssensor dient.

12. Anordnung zum Schalten elektrischer Lastkreise, enthaltend ein Schütz mit einem Magnetantrieb, der aus einem Magnetjoch mit einer Magnetspule und einem Magnetanker, an dem Brückenkontakte als bewegliche Schütz-Kontakte über eine Kontakthalterung angekoppelt sind, besteht und mit Mitteln zum Verschweißschutz der Brückenkontakte, wobei die Maßnahmen des Anspruches 1 oder eines der Ansprüche 2 bis 6 durchgeführt werden, **dadurch gekennzeichnet, dass** zur Schnellausschaltung ein Schaltelement (71) vorhanden ist, das ein Element (72) mit hohem elektrischen Spannungsbedarf, beispielsweise eine Supressordiode, überbrückt.

13. Anordnung nach Anspruch 8 oder Anspruch 13, **dadurch gekennzeichnet, dass** der Magnetspule (12) der Kondensator (77) zur Formung des vom Steuerstromkreis erzeugten Spannungspulses parallelgeschaltet ist.

14. Anordnung nach Anspruch 13, **dadurch gekennzeichnet, dass** das Schaltelement ein Feldeffekttransistor (71) ist.

15. Anordnung nach einem der Ansprüche 8 bis 14, **dadurch gekennzeichnet, dass** der Schütz-Magnetantrieb (10) einen lamellierten Eisenkreis (15) für Anker (13) und Joch (11) und eine gleichstrombetriebene Magnetspule (12) hat.

16. Anordnung nach Anspruch 15, **dadurch gekennzeichnet, dass** die Halteerregung des Schütz-Magnetantriebs (10) das 10fache der Mindesterregung zur Aufrechterhaltung des Einschaltzustandes nicht wesentlich übersteigt.

17. Anordnung nach Anspruch 16, **dadurch gekennzeichnet, dass** die Halteerregung des Magnetantriebs (10) des Schützes (1) bevorzugt zwischen dem 2- bis 5fachen der Mindesterregung liegt.

## Claims

1. Methods for switching electric load circuits containing a contactor having a solenoid actuator consisting of a magnet yoke having a solenoid coil and of a magnet armature to which bridge contacts are coupled via a contact mount as moving contactor contacts and generating between said armature and yoke in the activated condition a magnetic retention force that is greater than the armature opening force,
performing the following actions:

- To protect the bridge contacts from welding, fast deactivation in the millisecond range takes place in the contactor solenoid actuator, to achieve which

  - an increase in magnetic resistance is induced in the solenoid actuator's iron circuit by means of a blocking magnetic field, resulting in a weakening of the solenoid coil's magnetic field, or a countervoltage is applied to the solenoid coil circuit and/or an element having a high voltage draw is switched into the solenoid coil circuit,

- as a consequence of which the bridge contacts, being the main contactor contacts, are opened with lasting effect.

2. Method according to claim 1, **characterised in that** means for registering short-circuiting of the load circuit are provided by means of which the fast deactivation of the contactor solenoid actuator (10) is initiated.

3. Method according to claim 1 or 2, **characterised in that** the time elapsing between the start of deactivation and the instant at which the contacts open (to) is determined by means of the fast deactivation and used as a definition basis for determining the residual life of the switch contacts (3a, 5a, 3b, 5b).

4. Method according to one of the preceding claims, **characterised in that** data relating to the fast deactivation, such as short-circuit, short-circuit current level and residual life data, is presented on an operational display.

5. Method according to one of the preceding claims, **characterised in that** data relating to the fast deactivation is conveyed over a data bus to a central evaluation and monitoring device.

6. Method according to one of the preceding claims, **characterised in that** for fast deactivation a blocking magnetic field is generated which is orientated in a part (19) of the iron circuit (15) perpendicularly to the operational magnetic field ($\vec{B}$) of the solenoid actuator (10) and weakens the operational magnetic flux (17) of said solenoid actuator (10).

7. Arrangement for switching electric load circuits containing a contactor having a solenoid actuator consisting of a magnet yoke having a solenoid coil and of a magnet armature to which bridge contacts are coupled via a contact mount as moving contactor contacts and provided with means for protecting the bridge contacts from welding, with the actions of claim 1 or of one of claims 2 to 6 being carried out, **characterised in that** a current conduction (18) is provided perpendicular to the lamination level (15) of the armature (13) and the yoke (11) for generating the blocking magnetic field (19).

8. Arrangement for switching electric load circuits containing a contactor having a solenoid actuator consisting of a magnet yoke having a solenoid coil and of a magnet armature to which bridge contacts are coupled via a contact mount as moving contactor contacts and provided with means for protecting the bridge contacts from welding, with the actions of claim 1 or of one of claims 2 to 6 being carried out, **characterised in that** for fast deactivation a charged capacitor (52) is present that generates a countervoltage pulse.

9. Arrangement according to claim 7 or 8, **characterised in that** a contactor solenoid coil (12) with an inductor (22) having sufficiently large inductance is connected in series.

10. Arrangement according to claim 8, **characterised in that** the countervoltage pulse is applied to the solenoid coil (12) via a switch element (51).

11. Arrangement according to claim 10, **characterised in that** the switch element (51) is a reed switch serving equally as a short-circuit sensor.

12. Arrangement for switching electric load circuits containing a contactor having a solenoid actuator consisting of a magnet yoke having a solenoid coil and of a magnet armature to which bridge contacts are coupled via a contact mount as moving contactor contacts and provided with means for protecting the bridge contacts from welding, with the actions of claim 1 or of one of claims 2 to 6 being carried out, **characterised in that** for fast deactivation a switch element (71) is present that bridges an element (72) having a high voltage draw such as, for example, a suppressor diode.

13. Arrangement according to claim 8 or 13, **characterised in that** the capacitor (77) for forming the voltage pulse generated by the control circuit is connected in parallel with the solenoid coil (12).

14. Arrangement according to claim 13, **characterised in that** the switch element is a field-effect transistor (71).

15. Arrangement according to one of claims 8 to 14, **characterised in that** the contactor solenoid actuator (10) has a laminated iron circuit (15) for the armature (13) and yoke (11) and a dc-operated solenoid coil (12).

16. Arrangement according to claim 15, **characterised in that** the hold-in energizing value of the contactor solenoid actuator (10) does not substantially exceed ten times the minimum energizing value for maintaining the activated condition.

17. Arrangement according to claim 16, **characterised in that** the hold-in energizing value of the contactor's (1) solenoid actuator (10) is preferably between two and five times the minimum energizing value.

## Revendications

1. Procédé pour commuter des circuits électriques de charge, confortant un contacteur muni d'un entraînement magnétique, qui est constitué d'une culasse d'aimant ayant une bobine d'aimant et une palette mobile à laquelle sont couplés, par l'intermédiaire d'un support de contacts, des contacts à pont en tant que contacts mobiles de contacteur, et qui dans l'état de fermeture engendre, entre la palette mobile et la culasse, une force magnétique supérieure à la force d'ouverture de palette mobile, présentant les mesures suivantes:

   - pour la protection contre le soudage des contacts à pont, on produit dans l'entraînement magnétique une coupure rapide de l'ordre de la milliseconde, ce pour quoi

      - on produit, grâce à un champ magnétique de blocage, une augmentation de la résistance magnétique dans le circuit de fer de l'entraînement magnétique et un abaissement du champ magnétique de bobine en résultant, ou bien on applique une tension électrique opposée au circuit de courant de bobine, et/ou on commute dans le circuit de courant de bobine, un élément à grand besoin de tension électrique,

   - de sorte que les contacts à pont en tant que contacts principaux de contacteur sont ouverts de manière permanente.

2. Procédé selon la revendication 1, **caractérisé en**

**ce qu'**il est prévu une détection de court-circuit du circuit de charge, par laquelle est initiée la coupure rapide de l'entraînement magnétique (10) du contacteur.

3.  Procédé selon la revendication 1 ou la revendication 2, **caractérisé en ce qu'**avec la coupure rapide, on détermine la durée de l'instant du début de la coupure jusqu'à l'instant d'ouverture ($t_0$) des contacts, et celle-ci est exploitée comme base pour la définition de la reconnaissance de la durée de vie résiduelle des contacts de commutation (3a, 5a, 3b, 5b).

4.  Procédé selon l'une des revendications précédentes, **caractérisé en ce que** des données de la coupure rapide, telles que court-circuit, niveau du courant de court-circuit et durée de vie résiduelle, sont visualisées sur un affichage de service.

5.  Procédé selon l'une des revendications précédentes, **caractérisé en ce que** des données de la coupure rapide sont transmises par l'intermédiaire d'un bus de données, à une unité centrale de traitement et de contrôle.

6.  Procédé selon l'une des revendications précédentes, **caractérisé en ce que** pour la coupure rapide, on engendre un champ magnétique de blocage qui, dans une partie du circuit de fer (15), est orienté perpendiculairement au champ magnétique (B) de fonctionnement normal de l'entraînement magnétique (10), et qui affaiblit le flux magnétique (17) de fonctionnement normal de l'entraînement magnétique (10).

7.  Agencement pour commuter des circuits électriques de charge, comportant un contacteur muni d'un entraînement magnétique, qui est constitué d'une culasse d'aimant ayant une bobine d'aimant et une palette mobile à laquelle sont couplés, par l'intermédiaire d'un support de contacts, des contacts à pont en tant que contacts mobiles de contacteur, et avec des moyens pour la protection contre le soudage des contacts à pont, les mesures selon la revendication 1 ou l'une des revendications 2 à 6 étant effectuées, **caractérisé en ce qu'**il est prévu un trajet de courant (18) pour l'excitation du champ magnétique de blocage (19) perpendiculairement au plan (15) de lamellation de la palette mobile (13) et de la culasse (11).

8.  Agencement pour commuter des circuits électriques de charge, comportant un contacteur muni d'un entraînement magnétique, qui est constitué d'une culasse d'aimant ayant une bobine d'aimant et une palette mobile à laquelle sont couplés, par l'intermédiaire d'un support de contacts, des contacts à pont en tant que contacts mobiles de contacteur, et des moyens pour la protection contre le soudage des contacts à pont, les mesures selon la revendication 1 ou l'une des revendications 2 à 6 étant effectuées, **caractérisé en ce que** pour la coupure rapide, il est prévu un condensateur (52) chargé, qui produit une impulsion de tension opposée.

9.  Agencement selon la revendication 7 ou la revendication 8, **caractérisé en ce qu'**une bobine d'aimant (12) de contacteur est montée en série avec un inductance (22) présentant une valeur d'inductance suffisamment grande.

10. Agencement selon la revendication 8, **caractérisé en ce que** l'impulsion de tension opposée est appliquée par l'intermédiaire d'un élément de commutation (51) à la bobine d'aimant (12).

11. Agencement selon la revendication 10, **caractérisé en ce que** l'élément de commutation (51) est un interrupteur Reed qui fait simultanément office de détecteur de court-circuit.

12. Agencement pour commuter des circuits électriques de charge, comportant un contacteur muni d'un entraînement magnétique, qui est constitué d'une culasse d'aimant ayant une bobine d'aimant et une palette mobile à laquelle sont couplés, par l'intermédiaire d'un support de contacts, des contacts à pont en tant que contacts mobiles de contacteur, et des moyens pour la protection contre le soudage des contacts à pont, les mesures selon la revendication 1 ou l'une des revendications 2 à 6 étant effectuées, **caractérisé en ce que** pour la coupure rapide, il est prévu un élément de commutation (71) qui shunte un élément (72) à grand besoin de tension électrique élevé, par exemple une diode d'antiparasitage.

13. Agencement selon la revendication 8 ou la revendication 12, **caractérisé en ce qu'**avec la bobine d'aimant (12) est monté en parallèle, le condensateur (77) pour le formage de l'impulsion de tension engendrée par le circuit de courant de commande.

14. Agencement selon la revendication 13, **caractérisé en ce que** l'élément de commutation est un transistor à effet de champ (71).

15. Agencement selon l'une des revendications 8 à 14, **caractérisé en ce que** l'entraînement magnétique (10) de contacteur possède un circuit de fer (15) en lamelles pour la palette mobile (13) et la culasse (11), et une bobine d'aimant (12) fonctionnant par courant continu.

**16.** Agencement selon la revendication 15, **caractérisé en ce que** l'excitation de maintien de l'entraînement magnétique (10) de contacteur, ne dépasse pas sensiblement 10 fois l'excitation minimum pour conserver l'état de fermeture.

**17.** Agencement selon la revendication 16, **caractérisé en ce que** l'excitation de maintien de l'entraînement magnétique (10) du contacteur (1) se situe de préférence entre 2 à 5 fois l'excitation minimum.

**FIG 1**

FIG 2

FIG 3

**FIG 4**

EP 1 089 308 B1

FIG 5

FIG 7

FIG 6

EP 1 089 308 B1

FIG 8

EP 1 089 308 B1

FIG 9